# EUROPEAN PATENT APPLICATION

(11) **EP 3 196 053 A1**
(43) Date of publication of application: **26.07.2017**
(21) Application number: 15831850.1
(22) Date of filing: 22.07.2015
(51) Int. Cl.: B60C 13/00, B60C 15/06, B60C 19/08

(54) **PNEUMATIC TIRE**

(30) Priority: 14.08.2014 JP 2014165235
(71) Applicant: Sumitomo Rubber Industries, Ltd., Kobe-shi, Hyogo 651-0072 (JP)
(72) Inventor: ISHINO Soh, Kobe-shi Hyogo 651-0072 (JP)
(74) Representative: TBK
(86) International application number: PCT/JP2015/070754
(87) International publication number: WO 2016/024463

(57) **Abstract**

The present invention provides a pneumatic tire that is excellent in electrical conductivity, fuel economy, handling stability and crack growth resistance. The pneumatic tire of the present invention has a specific structure, including: a sidewall portion formed by laminating two or more rubber layers including (1) an outer sidewall layer constituting an outer surface of the tire and (2) a conductive inner sidewall layer connected to a clinch and a breaker and located between a carcass and the outer sidewall layer (1); a tread portion; a bead portion including the clinch; the carcass; the breaker; and an electrically conductive rubber, wherein in the sidewall portion, the thickness ratio of the layer (1) to layer (2), the ratio of the storage modulus E'(2) at 70°C of layer (2) to the storage modulus E'(1) at 70°C of the layer (1), and the volume resistivity of layer (2) fall within specific ranges.

## Description

### TECHNICAL FIELD

The present invention relates to a pneumatic tire.

### BACKGROUND ART

In general, raw materials derived from petroleum resources such as butadiene rubber and carbon black are widely used in rubber compositions for tires; however, due to tighter regulations to reduce carbon dioxide emissions and in view of finite oil reserves and thus limited availability, studies have been made to partially or entirely replace the petroleum resource-derived raw materials with raw materials derived from non-petroleum resources such as natural rubber and white filler (e.g. silica, calcium carbonate).

For example, when silica is incorporated into tire components, the electric resistance of the tires tends to increase because silica is high in electric insulation; accordingly, static electricity tends to accumulate in the vehicle, and thus there is a risk that during refueling a spark due to static electricity may occur, igniting the fuel. Moreover, if, in response to the recent strong demand for fuel economy, a single carcass ply or a thinner sidewall gauge is used, or the amount of filler is reduced, it tends to be more difficult to ensure electrical conductivity (conductivity) of tires.

In addition, the use of a single carcass ply or a thinner sidewall gauge unfortunately causes deterioration of handling stability. Accordingly, there is a need for tires which provide good fuel economy, electrical conductivity and handling stability, and further ensure other properties including crack growth resistance.

Patent Literature 1 discloses a tire that includes a conductive inside sidewall layer connected to a clinch, a conductive inside tread layer having a specific composition, connected to the conductive inside sidewall layer, and other components to improve electrical conductivity and fuel economy. However, the tire still leaves room for improvement with respect to fuel economy, electrical conductivity, handling stability, crack growth resistance and the like.

### CITATION LIST

### PATENT LITERATURE

Patent Literature 1: JP 2013-6571 A

### SUMMARY OF INVENTION

### TECHNICAL PROBLEM

An object of the present invention is to provide a pneumatic tire that is excellent in electrical conductivity, fuel economy, handling stability and crack growth resistance by solving the above-described problems.

### SOLUTION TO PROBLEM

The present invention relates to a pneumatic tire, including: a tread portion; a sidewall portion; a bead portion, the bead portion including a clinch in an area abutting against a rim; a carcass located to extend radially inwardly of the tread portion and the sidewall portion to the bead portion; a breaker located between the tread portion and the carcass; and an electrically conductive rubber connected to the breaker and located to be exposed on a surface of the tread portion, the sidewall portion being formed by laminating two or more rubber layers including (1) an outer sidewall layer constituting an outer surface of the tire and (2) a conductive inner sidewall layer connected to the clinch and the breaker and located between the carcass and the outer sidewall layer (1), each of the clinch, the conductive inner sidewall layer (2), the breaker and the electrically conductive rubber having a volume resistivity of less than 1×10⁸ Ω·cm, each of the outer sidewall layer (1) and the carcass having a volume resistivity of 1×10⁸ Ω·cm or more, a thickness ratio of the outer sidewall layer (1) to the conductive inner sidewall layer (2) [(thickness of layer (1))/(thickness of layer (2))] being 2.0 or more, and a ratio of a storage modulus E' (2) at 70°C of the conductive inner sidewall layer (2) to a storage modulus E'(1) at 70°C of the outer sidewall layer (1) (E'(2)/E'(1)) being 1.3 or more.

The outer sidewall layer (1) preferably has a storage modulus E'(1) at 70°C of 5.0 MPa or less and a loss modulus E"(1) at 70°C of 0.5 MPa or less.

A ratio of a loss modulus E"(2) at 70°C of the conductive inner sidewall layer (2) to a loss modulus E"(1) at 70°C of the outer sidewall layer (1) (E"(2)/E"(1)) is preferably 1.5 or less.

The conductive inner sidewall layer (2) is preferably formed from a rubber composition for conductive inner sidewall layers containing 1.0 to 10 parts by mass of conductive carbon black per 100 parts by mass of a rubber component.

### ADVANTAGEOUS EFFECTS OF INVENTION

The pneumatic tire according to the present invention has a specific structure, including: a sidewall portion formed by laminating two or more rubber layers including (1) an outer sidewall layer constituting an outer surface of the tire and (2) a conductive inner sidewall layer connected to a clinch and a breaker and located between a carcass and the outer sidewall layer (1); a tread portion; a bead portion including the clinch; the carcass; the breaker; and an electrically conductive rubber, wherein in the sidewall portion, the thickness ratio of the outer sidewall layer (1) to the conductive inner sidewall layer (2), and the ratio of the storage modulus E'(2) at 70°C of the conductive inner sidewall layer (2) to the storage modulus E'(1) at 70°C of the outer sidewall layer (1) fall within specific ranges, and the conductive inner sidewall layer (2) has a volume resistivity falling within a specific range. Such a pneumatic tire can ensure excellent electrical conductivity, fuel economy, handling stability and crack growth resistance.

### BRIEF DESCRIPTION OF DRAWINGS

Fig. 1 is a diagram showing the upper right half of the cross section of an example of the pneumatic tire of the present invention.
Fig. 2 is a cross sectional diagram conceptually illustrating an electric resistance measuring instrument for assessing electrical conductivity of tires.

### DESCRIPTION OF EMBODIMENTS

The pneumatic tire of the present invention includes: a tread portion; a sidewall portion; a bead portion including a clinch in the area abutting against a rim; a carcass located to extend radially (in the radial direction of the tire) inwardly of the tread portion and the sidewall portion to the bead portion; a breaker located between the tread portion and the carcass; and an electrically conductive rubber connected to the breaker and located to be exposed on the surface of the tread portion. The sidewall portion is formed by laminating two or more rubber layers including (1) an outer sidewall layer constituting an outer surface of the tire and (2) a conductive inner sidewall layer connected to the clinch and the breaker and located between the carcass and the outer sidewall layer (1). Each of the clinch, the conductive inner sidewall layer (2), the breaker and the electrically conductive rubber has a volume resistivity of less than 1×10⁸ Ω·cm. Each of the outer sidewall layer (1) and the carcass has a volume resistivity of 1×10⁸ Ω·cm or more. The thickness ratio of the outer sidewall layer (1) to the conductive inner sidewall layer (2) [(thickness of layer (1))/(thickness of layer (2))] is 2.0 or more. The ratio of the storage modulus E'(2) at 70°C of the conductive inner sidewall layer (2) to the storage modulus E'(1) at 70°C of the outer sidewall layer (1) (E'(2)/E'(1)) is 1.3 or more.

In the present invention, the sidewall portion is configured by laminating two or more rubber layers including (1) an outer sidewall layer constituting an outer surface of the tire and (2) a conductive inner sidewall layer connected to a clinch and a breaker and located between a carcass and the outer sidewall layer (1). Further, in the sidewall portion, the thickness ratio of the outer sidewall layer (1) to the conductive inner sidewall layer (2), and the ratio of the storage modulus E'(2) at 70°C of the conductive inner sidewall layer (2) to the storage modulus E'(1) at 70°C of the outer sidewall layer (1) are equal to or larger than specific values, and the conductive inner sidewall layer (2) has a volume resistivity of less than a specific value. The pneumatic tire thus provided is excellent in electrical conductivity, fuel economy, handling stability and crack growth resistance.

The sidewall portion in the present invention may include other layers as long as it includes the outer sidewall layer (1) and the conductive inner sidewall layer (2). Each of the outer sidewall layer and the conductive inner sidewall layer may independently be provided as a plurality of layers. The form obtained by laminating two or more rubber layers including the outer sidewall layer (1) and the conductive inner sidewall layer (2) may be that in which the outer sidewall layer (1) and the conductive inner sidewall layer (2) are laminated in direct contact with each other, or in which another layer is laminated between the outer sidewall layer (1) and the conductive inner sidewall layer (2) so that the outer sidewall layer (1) and the conductive inner sidewall layer (2) are laminated without direct contact with each other.

The thickness ratio of the outer sidewall layer (1) to the conductive inner sidewall layer (2) [(thickness of layer (1))/(thickness of layer (2))] is 2.0 or more. By setting the ratio of the thickness of layer (1) to the thickness of layer (2) within such a range, the electrical conductivity of the tire can be improved. The thickness ratio is preferably 2.5 or more, and more preferably 2.7 or more. If the thickness ratio is less than 2.0, sufficient crack growth resistance in the sidewall portion may not be ensured. The thickness ratio is also preferably 3.5 or less, more preferably 3.3 or less and further preferably 3.0 or less. When the thickness ratio exceeds 3.5, sufficient handling stability may not be ensured.

The thickness of the conductive inner sidewall layer (2) is preferably 0.5 mm or more for precision control of the thickness during extrusion. When the thickness is less than 0.5 mm, for example, flowing of the compound during vulcanization or variations during extrusion may occur and thus sufficient electrical conductivity cannot be ensured. In order to reduce the rolling resistance of the tire, the thickness is preferably 3.0 mm or less, more preferably 2.0 mm or less and further preferably 1.5 mm or less.

The thickness of the sidewall portion including the outer sidewall layer (1) and the conductive inner sidewall layer (2) is preferably 1.0 mm or more, more preferably 1.2 mm or more, further preferably 1.5 mm or more and particularly preferably 2.0 mm or more. When the thickness is less than 1.0 mm, the crack growth resistance in the sidewall portion may not be sufficient. The total thickness is also preferably 3.0 mm or less, and more preferably 2.5 mm or less. When the thickness exceeds 3.0 mm, fuel economy tends to deteriorate.

In the present Description, the thickness of the sidewall portion, the thickness of the outer sidewall layer (1) and the thickness of the conductive inner sidewall layer (2) refer to the respective thicknesses in the normal direction to the respective axially-outward side surfaces, on a line axially extrapolated from the thinnest sidewall portion.

The ratio of the storage modulus E'(2) at 70°C of the conductive inner sidewall layer (2) to the storage modulus E'(1) at 70°C of the outer sidewall layer (1) (E'(2)/E'(1)) is 1.3 or more. By setting the ratio of E' (2) to E'(1) within such a range, the handling stability of the tire can be improved. If the ratio is less than 1.3, in-plane torsional rigidity may decrease so that sufficient handling stability cannot be ensured. The storage modulus ratio is also preferably 2.0 or less, and more preferably 1.5 or less. When the ratio exceeds 2.0, ride comfort may deteriorate.

The storage modulus E'(1) at 70°C of the outer sidewall layer (1) is preferably 4.0 to 5.0 MPa. When the outer sidewall layer (1) constituting a tire outer surface has a storage modulus at 70°C falling within such a range, good fuel economy can be obtained. The storage modulus E'(1) at 70°C of the outer sidewall layer (1) is more preferably 4.2 to 4.5 MPa.

The storage modulus E'(2) at 70°C of the conductive inner sidewall layer (2) is preferably 5.5 MPa or more, and more preferably 5.8 MPa or more. When the storage modulus E'(2) is 5.5 MPa or more, better handling stability can be obtained. However, the storage modulus E'(2) is preferably 9.0 MPa or less, and more preferably 6.5 MPa or less. When the storage modulus E'(2) exceeds 9.0 MPa, ride comfort may deteriorate.

The ratio of the loss modulus E"(2) at 70°C of the conductive inner sidewall layer (2) to the loss modulus E"(1) at 70°C of the outer sidewall layer (1) (E"(2)/E"(1) is preferably 1.5 or less. By setting the ratio of E"(2) to E"(1) within such a range, fuel economy can be further improved. The ratio is more preferably 1.3 or less. When the ratio exceeds 1.5, fuel economy may deteriorate. The loss modulus ratio is also preferably 0.7 or more, and more preferably 1.0 or more. When the ratio is less than 0.7, sufficient crack growth resistance may not be ensured.

The loss modulus E"(1) at 70°C of the outer sidewall layer (1) is preferably 0.5 MPa or less, and more preferably 0.4 MPa or less. In the pneumatic tire of the present invention, since the conductive inner sidewall layer (2) is provided in addition to the outer sidewall layer (1) constituting a tire outer surface, electrical conductivity can be ensured while ensuring sufficient crack growth resistance for the sidewall portion, even when the loss modulus at 70°C of the outer sidewall layer (1) is 0.5 MPa or less. The loss modulus E"(1) is also preferably 0.2 MPa or more, and more preferably 0.3 MPa or more. When the loss modulus E"(1) is less than 0.2 MPa, the crack growth resistance of the sidewall portion cannot be ensured in some cases.

The loss modulus E"(2) at 70°C of the conductive inner sidewall layer (2) is preferably 0.2 to 0.6 MPa. When the loss modulus E"(2) falls within such a range, sufficient electrical conductivity can be ensured. The loss modulus E"(2) is more preferably 0.3 to 0.5 MPa.

The storage moduli and loss moduli can be measured by the methods described in EXAMPLES.

In the present invention, the advantageous effects of the present invention can be more suitably achieved by setting the following parameters within the above ranges: the storage modulus E'(1) at 70°C of the outer sidewall layer (1), the loss modulus E"(1) at 70°C of the outer sidewall layer (1), the thickness ratio of the outer sidewall layer (1) to the conductive inner sidewall layer (2), the ratio of the storage modulus E' (2) at 70°C of the conductive inner sidewall layer (2) to the storage modulus E'(1) at 70°C of the outer sidewall layer (1), and the ratio of the loss modulus E"(2) at 70°C of the conductive inner sidewall layer (2) to the loss modulus E"(1) at 70°C of the outer sidewall layer (1).

The storage moduli of the outer sidewall layer (1) and the conductive inner sidewall layer (2) can be set as appropriate by properly selecting a rubber component or reinforcing materials such as carbon black or silica for the rubber composition for outer sidewall layers and the rubber composition for conductive inner sidewall layers, respectively. The loss moduli of the outer sidewall layer (1) and the conductive inner sidewall layer (2) can also be set as appropriate by properly selecting a rubber component or reinforcing materials such as carbon black or silica for the rubber composition for outer sidewall layers and the rubber composition for conductive inner sidewall layers, respectively. Then, the ratio E'(2)/E'(1) can be set as appropriate by combining the outer sidewall layer (1) and the conductive inner sidewall layer (2), each having a desired storage modulus set as described above, while the ratio E"(2)/E"(1) can be set as appropriate by combining the outer sidewall layer (1) and the conductive inner sidewall layer (2), each having a desired loss modulus set as described above.

The storage moduli and the loss moduli can be set as appropriate in light of the following guidelines.

First, although the type of rubber does not greatly affect the storage modulus, when a crystalline component-containing rubber such as BR containing syndiotactic polybutadiene crystals is used, the storage modulus can be set relatively larger than the loss modulus. The term "relatively" means comparison with the change obtained when the reinforcing material content is varied as described later. The loss modulus is affected by the type of rubber, and the loss modulus increases in the following order: IR, BR and SBR. In SBR, the loss modulus increases with the increase of the weight ratio of the styrene content in SBR.

Next, with respect to reinforcing materials, the storage and loss moduli vary linearly depending on the reinforcing material content, and thus the storage and loss moduli increase with the increase of the content. The relation between the storage and loss moduli depends on the type of reinforcing material. In the case of carbon black, there is a trend where the lower the grade of carbon black, the smaller the amount of change caused by its content.

Additionally, the factors that can change the balance between the storage and loss moduli may include vulcanizing agents. By increasing the vulcanizing agent content, the storage modulus can be increased, while the loss modulus can be reduced. However, the increase in vulcanizing agent content may lead to the problem of decrease in tensile strength at break or crack growth resistance.

The pneumatic tire of the present invention includes: a tread portion; a sidewall portion; a bead portion including a clinch in the area abutting against a rim; a carcass located to extend radially inwardly of the tread portion and the sidewall portion to the bead portion; a breaker located between the tread portion and the carcass; and an electrically conductive rubber connected to the breaker and located to be exposed on the surface of the tread portion. The sidewall portion includes a conductive inner sidewall layer (2) connected to the clinch and the breaker and located between the carcass and the outer sidewall layer (1). With such a structure, during running of the tire static electricity generated in the ground contact area or the clinch located in the area contacting the rim can be released outside the tire through the following conductive layers (well conductive rubber layers): the rim, clinch, conductive inner sidewall layer, breaker and electrically conductive rubber, which are electrically connected inside the tire, and thus the electric resistance of the tire can be reduced.

Hereinafter, an example of the pneumatic tire of the present invention is described with reference to the accompanying figures.

### <Basic Structure>

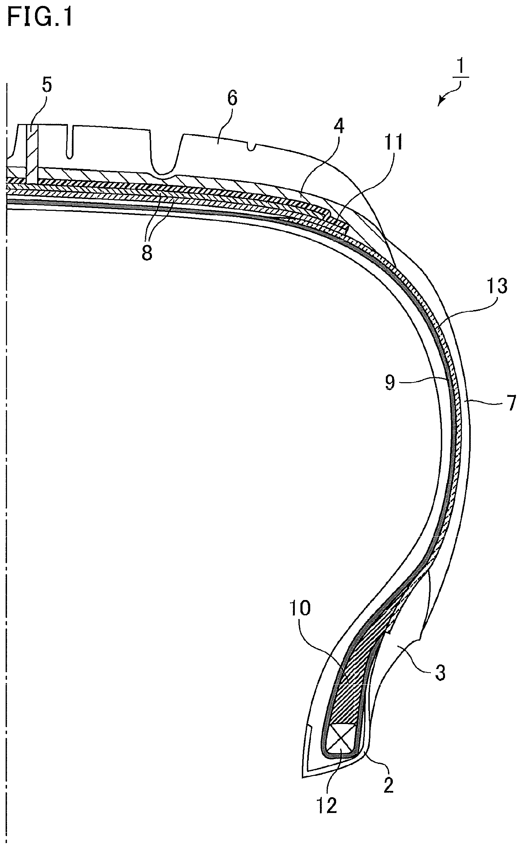

The structure of the pneumatic tire of the present invention is as shown in, for example, the upper right half of the cross section of the tire in Fig. 1. The pneumatic tire 1 includes: a tread rubber 6 constituting a tread portion; an outer sidewall layer 7 and a conductive inner sidewall layer 13, which constitute each of a pair of sidewall portions radially inwardly extending from both ends of the tread rubber 6; a clinch rubber 3 constituting a clinch positioned at the inner end of each sidewall portion; and a chafer rubber 2 constituting a chafer positioned over the rim. A carcass 9 is bridged between the clinches or chafers, and a breaker rubber 8 constituting a breaker is provided radially outwardly of the carcass 9.

The carcass 9 is formed of one or more carcass plies in which carcass cords are arranged, extending from the tread portion through the sidewall portion, then turned up axially from the inside to the outside around a bead core 12 and a bead apex 10 extending from the upper end of the bead core 12 toward the sidewall, and finally anchored by the turn-ups. The pneumatic tire of the present invention can achieve sufficient performance even with the carcass 9 formed of a single carcass ply. The breaker rubber 8 constituting a breaker is formed of two or more breaker plies in which breaker cords are arranged, and the breaker plies are stacked in different orientations to cross the breaker cords in one breaker ply with another breaker ply.

Between the tread rubber 6 and the breaker rubber 8, a covering rubber (undertread) 4 is located inside the tread rubber 6, and a band 11 having a joint-less structure is located inside the covering rubber 4. An electrically conductive rubber 5 is located in the tread rubber 6 to be in contact with the breaker rubber 8 and to be partially exposed on the ground contact surface. In the present invention, the conductive inner sidewall layer 13 has a contact area with the breaker rubber 8 and is located between the carcass 9 and the outer sidewall layer 7 and extending at least from a position in contact with the breaker rubber 8 to the clinch rubber 3. Accordingly, the pneumatic tire 1 has a structure in which the electrically conductive rubber 5, breaker rubber 8, conductive inner sidewall layer 13 and clinch rubber 3 are electrically connected.

The pneumatic tire of the present invention can be used in various vehicles such as passenger vehicles, trucks and buses, and heavy-duty vehicles.

Next, the rubber compositions used in the tire components are described.

### <Conductive inner sidewall layer>

The structure of the conductive inner sidewall layer 13 is such that it has a contact area with the breaker rubber 8 and is located between the carcass 9 and the outer sidewall layer 7 and extending at least from a position in contact with the breaker rubber 8 to the clinch rubber 3, and, for example, it is electrically connected with the breaker rubber 8 at the upper end of the conductive inner layer 13 and with the clinch rubber 3 at the lower end thereof.

The conductive inner sidewall layer 13 may be located between the carcass 9 and the outer sidewall layer 7 (for example, located outwardly of and adjacent to the carcass 9 but inwardly of and adjacent to the outer sidewall layer 7) and have areas in contact with the breaker rubber 8 and the clinch rubber 3. The conductive inner sidewall layer 13 may also be partially located between the carcass and the breaker and formed continuously or discontinuously along the circumferential direction of the tire.

The contact areas between the conductive inner sidewall layer 13 and the breaker rubber 8 or clinch rubber 3 are each preferably such that it has a strip-like area in contact with the conductive inner layer 13 with a width of 1.0 mm or more, more preferably 2.0 mm or more, along the tire circumferential direction. A sufficient tire conductivity effect can be obtained by bringing the conductive inner layer 13 into contact with the breaker rubber 8 under the above-described conditions. The contact with the clinch rubber 3 preferably involves a contact area along the carcass shape with a width of 1.0 mm or more, more preferably 2.0 mm or more.

The volume resistivity of the conductive inner sidewall layer (2) is less than 1×10⁸ Ω·cm, and is preferably set to 1×10⁷ Ω·cm or less, and more preferably 1×10⁶ Ω·cm or less. When the volume resistivity is less than 1×10⁸ Ω·cm, the tire can obtain good electrical conductivity. The lower limit of the volume resistivity is not particularly limited, but is preferably set to 1×10³ Ω·cm or more, more preferably 1×10⁴ Ω·cm or more, in order to avoid the promotion of the electrochemical reaction in the tire/rim contact area that can cause easy rusting of the rim.

In the present Description, the volume resistivity can be measured by the method described in EXAMPLES.

The conductive inner sidewall layer (2) is formed from a rubber composition for conductive inner sidewall layers (2).

Examples of materials that can be used as the rubber component in the rubber composition for conductive inner sidewall layers (2) include, but not limited to: natural rubber (NR), epoxidized natural rubber (ENR), synthetic diene rubbers such as polyisoprene rubber (IR), polybutadiene rubber (BR), styrene butadiene rubber (SBR), styrene isoprene butadiene rubber (SIBR), chloroprene rubber (CR), acrylonitrile butadiene rubber (NBR), ethylene propylene diene rubber (EPDM), butyl rubber (IIR), and halogenated butyl rubber (X-IIR), and other diene rubbers. For good fuel economy and good handling stability, NR, BR and SBR are preferred among these, with a combination of NR and BR being more preferred. The combined use of NR and BR can further reduce rolling resistance due to the properties of the rubber component, and at the same time further improve the dispersibility of carbon black and therefore fuel economy.

The NR is not particularly limited, and for example, those commonly used in the tire industry such as SIR20, RSS#3 and TSR20 can be used.

When NR is contained, the amount of the NR based on 100% by mass of the rubber component is preferably 30% by mass or more, and more preferably 40% by mass or more. The amount of the NR is preferably 70% by mass or less, and more preferably 60% by mass or less. When the amount of the NR falls within the range indicated above, the advantageous effects of the present invention can be more suitably achieved.

The BR is not particularly limited, and examples include high cis content BR such as BR1220 manufactured by Zeon Corp., BR130B and BR150B both manufactured by Ube Industries, Ltd., and JSR BR51, T700 and BR730 all manufactured by JSR Corp.; low cis content BR such as BR1250H manufactured by Zeon Corp.; and syndiotactic polybutadiene crystal-containing BR such as VCR412 and VCR617 both manufactured by Ube Industries, Ltd.

When BR is contained, the amount of the BR based on 100% by mass of the rubber component is preferably 30% by mass or more, and more preferably 40% by mass or more. The amount of the BR is preferably 70% by mass or less, and more preferably 60% by mass or less. When the amount of the BR falls within the range indicated above, the advantageous effects of the present invention can be more suitably achieved.

The SBR is not particularly limited, and for example, those commonly used in the tire industry such as emulsion polymerized styrene butadiene rubber (E-SBR) and solution polymerized styrene butadiene rubber (S-SBR) can be used. In particular, it is preferred to use an SBR having a styrene content of 5 to 25% by mass and a vinyl content of 15 to 70% by mass because the advantageous effects of the present invention (especially, good fuel economy) can be more suitably achieved. The rubber in the interior of the tire is less likely to release heat and more likely to accumulate heat. The use of a specific styrene butadiene rubber reinforces the heat resistance of the polymer and improves rubber rigidity, especially at high temperatures, and therefore handling stability during high speed running. When silica is incorporated, silica contributes to the improvement of fuel economy, but shows lower reinforcement than carbon black; moreover, there is another problem in that silane coupling agents poorly react with natural rubber or polybutadiene rubber. By using styrene butadiene rubber together with silica, it is possible to obtain a strength required for the sidewall rubber subject to high strain.

When SBR is contained, the amount of the SBR based on 100% by mass of the rubber component is preferably 5% by mass or more, and more preferably 10% by mass or more. The amount of the SBR is preferably 35% by mass or less, and more preferably 30% by mass or less. When the amount of the SBR falls within the range indicated above, the advantageous effects of the present invention can be more suitably achieved.

The rubber composition for conductive inner sidewall layers (2) preferably contains conductive carbon black. This provides good electrical conductivity so that the advantageous effects of the present invention can be well achieved. The conductive carbon black may be a commercially available product such as Lionite manufactured by Lion Corp., Ketjenblack EC600JD and EC300J both manufactured by Lion Corp.

The dibutyl phthalate oil absorption (DBP) of the conductive carbon black is preferably 300 ml/100 g or more, and more preferably 350 ml/100 g or more. When the DBP is less than 300 ml/100 g, sufficient electrical conductivity may not be imparted. The DBP of the conductive carbon black is also preferably 600 ml/100 g or less, more preferably 500 ml/100 g or less, and further preferably 400 ml/100 g or less. When the DBP exceeds 600 ml/100 g, crack growth resistance or handling stability may decrease.

In the present Description, the DBP of carbon black is measured according to JIS K6217-4:2001.

The nitrogen adsorption specific surface area (N₂SA) of the conductive carbon black is preferably 700 m²/g or more, and more preferably 800 m²/g or more. When the N₂SA is less than 700 m²/g, sufficient electrical conductivity may not be imparted. The N₂SA is preferably 1300 m²/g or less, more preferably 1200 m²/g or less, and further preferably 1100 m²/g or less. When the N₂SA exceeds 1300 m²/g, fuel economy or crack growth resistance may deteriorate.

In the present Description, the N₂SA of carbon black is determined according to JIS K 6217-2:2001.

The amount of the conductive carbon black per 100 parts by mass of the rubber component is preferably 1.0 part by mass or more, and more preferably 2.0 parts by mass or more. When the amount is less than 1.0 part by mass, sufficient electrical conductivity may not be imparted. The amount is also preferably 10 parts by mass or less, and more preferably 5.0 parts by mass or less. When the amount exceeds 10 parts by mass, fuel economy or crack growth resistance may decrease, and moreover, an increase in material cost or deterioration of processability may unfortunately occur.

The rubber composition for conductive inner sidewall layers (2) preferably contains, in addition to conductive carbon black, carbon black other than conductive carbon black (hereinafter, also referred to as "conventional carbon black"). This provides good reinforcement so that the improvement effects of the present invention can be synergistically obtained. The incorporation of a combination of conductive carbon black and conventional carbon black also enables only a small amount of conductive carbon black to suitably impart electrical conductivity.

The nitrogen adsorption specific surface area (N₂SA) of the conventional carbon black is preferably 15 m²/g or more, and more preferably 20 m²/g or more. When the N₂SA is less than 15 m²/g, reinforcement tends to decrease so that the desired properties cannot be obtained. The N₂SA is also preferably 150 m²/g or less, more preferably 105 m²/g or less, and further preferably 60 m²/g or less. When the N₂SA exceeds 150 m²/g, fuel economy tends to deteriorate.

The dibutyl phthalate oil absorption (DBP) of the conventional carbon black is preferably 60 ml/100 g or more, and more preferably 70 ml/100 g or more. When the DBP is less than 60 ml/100 g, reinforcement may decrease so that the desired properties cannot be obtained. The DBP is also preferably 180 ml/100 g or less, more preferably 140 ml/100 g or less, and further preferably 120 ml/100 g or less. When the DBP exceeds 180 ml/100 g, fuel economy or crack growth resistance tend to decrease.

The amount of the conventional carbon black per 100 parts by mass of the rubber component is preferably 20 parts by mass or more, and more preferably 25 parts by mass or more. When the amount is less than 20 parts by mass, reinforcement may not be ensured. The amount is preferably 70 parts by mass or less, and more preferably 50 parts by mass or less. When the amount exceeds 70 parts by mass, tanδ (rolling resistance properties) tends to deteriorate.

The rubber composition for conductive inner sidewall layers (2) may incorporate a softener. Examples of the softener include process oils such as paraffinic process oils, naphthenic process oils and aromatic process oils. The amount of the softener is preferably 1 to 30 parts by mass, more preferably 3 to 20 parts by mass, and further preferably 3 to 10 parts by mass, per 100 parts by mass of the rubber component.

The rubber composition for conductive inner sidewall layers (2) may appropriately incorporate, in addition to the components described above, compounding agents commonly used in the preparation of rubber compositions, such as other reinforcing fillers, zinc oxide, stearic acid, various antioxidants, tackifiers, wax, vulcanizing agents (e.g. sulfur), and vulcanization accelerators.

### <Outer sidewall layer>

The outer sidewall layer (1) in the pneumatic tire of the present invention may be formed from, for example, a rubber composition for outer sidewall layers (1) containing the following rubber component, filler and other components.

The rubber component may be as described above, and for example, NR or BR can be suitably used. As the filler, for example carbon black or silica can be used.

The volume resistivity of the outer sidewall layer (1) is 1×10⁸ Ω·cm or more. In the present invention, even when the volume resistivity of the outer sidewall layer (1) is set within such a range, since the volume resistivity of the conductive inner sidewall layer (2) and the volume resistivities of the clinch, breaker and electrically conductive rubber electrically connected to the layer (2) are controlled to be low while maintaining tire properties such as fuel economy and handling stability, static electricity generated in the pneumatic tire can be efficiently released through the thus produced electrically connected path. Moreover, since the thickness ratio of the outer sidewall layer (1) to the conductive inner sidewall layer (2), and the ratio of the storage modulus E'(2) at 70°C of the conductive inner sidewall layer (2) to the storage modulus E'(1) at 70°C of the outer sidewall layer (1) are set within the respective specific ranges, excellent fuel economy, excellent handling stability, and excellent crack growth resistance can also be simultaneously obtained.

### <Bead portion>

The bead portion includes a clinch formed of a clinch rubber 3 in the area contacting a rim flange, and further includes a chafer formed of a chafer rubber 2. During running of the tire, in which driving force is transmitted from the rim through the bead portion, static electricity is easily generated by the friction between the rim and the bead rubber. Since the clinch rubber 3 has a contact area with the conductive inner sidewall layer 13, the static electricity is efficiently released to the ground contact area through the inner conductive layer. In Fig. 1, the clinch rubber 3 is electrically connected to the conductive inner sidewall layer 13.

Here, the volume resistivity of the clinch is less than 1×10⁸ Ω·cm, and is preferably 1×10⁷ Ω·cm or less, and more preferably 1×10⁶ Ω·cm or less. With a volume resistivity of less than 1×10⁸ Ω·cm, the tire can obtain good electrical conductivity.

The clinch is formed from a rubber composition for clinches containing a rubber component, carbon black and other components.

The rubber component in the rubber composition for clinches may be as described above, and for example, NR or SBR can be suitably used. In this case, in the rubber composition for clinches, the amount of the NR is preferably 10 to 60% by mass, and more preferably 20 to 40% by mass, per 100% by mass of the rubber component, while the amount of the SBR is preferably 30 to 90% by mass, and more preferably 60 to 80% by mass, per 100% by mass of the rubber component.

The nitrogen adsorption specific surface area (N₂SA) of the carbon black used in the rubber composition for clinches is preferably 40 to 120 m²/g, and more preferably 60 to 90 m²/g. The amount of the carbon black is preferably 20 to 120 parts by mass, and more preferably 40 to 80 parts by mass, per 100 parts by mass of the rubber component.

### <Breaker>

The breaker formed of a breaker rubber 8 is in contact with the conductive inner sidewall layer 13 and the electrically conductive rubber 5 and is located between the tread rubber 6 and the carcass 9, and the volume resistivity of the breaker is set to be less than 1×10⁸ Ω·cm in order to ensure electrical conductivity. The volume resistivity is preferably 1×10⁷ Ω·cm or less, and more preferably 1×10⁶ Ω·cm or less.

The breaker is formed from a rubber composition for breakers containing a rubber component, carbon black and other components.

The rubber component in the rubber composition for breakers may be as described above, and for example, NR can be suitably used. In this case, in the rubber composition for breakers, the amount of the NR per 100% by mass of the rubber component is preferably 50% by mass or more, and more preferably 80% by mass or more, and may also be 100% by mass.

The nitrogen adsorption specific surface area (N₂SA) of the carbon black used in the rubber composition for breakers is preferably 40 to 120 m²/g, and more preferably 60 to 90 m²/g. The amount of the carbon black is preferably 20 to 120 parts by mass, and more preferably 40 to 80 parts by mass, per 100 parts by mass of the rubber component.

### <Electrically conductive rubber>

The electrically conductive rubber 5 is embedded in the tread portion, and a part of the rubber is exposed on the tire/ground contact surface while another part is connected to (in contact with) the breaker rubber 8, so that static electricity generated during running of the pneumatic tire is efficiently released to the ground contact surface. In Fig. 1, the electrically conductive rubber 5 is shown as a structure in which one electrically conductive rubber is embedded in the center of the tread portion, although a plurality of electrically conductive rubbers may be embedded. The width of the electrically conductive rubber in the width direction of the tire is, for example, 0.2 to 10 mm and preferably 0.9 to 1.5 mm. When the width is less than 0.2 mm, the electrically conductive effect is small, while when the width exceeds 10 mm, the ground contact area of the electrically conductive rubber in the tread portion relatively increases and thus ground contact properties may be impaired. The electrically conductive rubber is preferably formed as a circumferentially continuous layer, although it may also be formed discontinuously in the circumferential direction of the tire.

The volume resistivity of the electrically conductive rubber is less than 1×10⁸ Ω·cm. When the volume resistivity is less than 1×10⁸ Ω·cm, the electrical conductivity of the tire can be improved so that a static electricity-releasing effect can be obtained. The volume resistivity is preferably 1×10⁷ Ω·cm or less, and more preferably 1×10⁶ Ω·cm or less.

The electrically conductive rubber is formed from a rubber composition for electrically conductive rubbers containing a rubber component, carbon black and other components.

The rubber component in the rubber composition for electrically conductive rubbers may be as described above, and for example, SBR or BR can be suitably used. In this case, in the rubber composition for electrically conductive rubbers, the amount of the SBR is preferably 20 to 80% by mass, and more preferably 50 to 70% by mass, per 100% by mass of the rubber component, while the amount of the BR is preferably 10 to 70% by mass, and more preferably 30 to 50% by mass, per 100% by mass of the rubber component.

The nitrogen adsorption specific surface area (N₂SA) of the carbon black used in the rubber composition for electrically conductive rubbers is preferably 60 to 150 m²/g, and more preferably 90 to 120 m²/g. The amount of the carbon black is preferably 20 to 120 parts by mass, and more preferably 40 to 70 parts by mass, per 100 parts by mass of the rubber component.

### <Tread portion and Carcass>

The tread portion formed of a tread rubber and the carcass (carcass topping rubber) in the pneumatic tire of the present invention are each formed from, for example, a rubber composition containing the following rubber component, filler and other components.

The rubber component may be as described above, and for example, NR can be suitably used for the tread portion, and NR or SBR can be suitably used for the carcass. As the filler, for example carbon black or silica can be used.

Even when the volume resistivities of the tread rubber, outer sidewall layer and carcass are set to be 1×10⁸ Ω·cm or more, since the volume resistivity of the conductive inner sidewall layer and the volume resistivities of the clinch, breaker and electrically conductive rubber electrically connected to the layer are controlled to be low while maintaining tire properties such as rolling resistance and handling stability, static electricity generated in the pneumatic tire can be efficiently released through the thus produced electrically connected path. Moreover, since the thickness ratio of the outer sidewall layer (1) to the conductive inner sidewall layer (2), and the ratio of the storage modulus E'(2) at 70°C of the conductive inner sidewall layer (2) to the storage modulus E'(1) at 70°C of the outer sidewall layer (1) are set within the respective specific ranges, excellent fuel economy, excellent handling stability, and excellent crack growth resistance can also be simultaneously obtained.

The pneumatic tire of the present invention can be produced from the rubber compositions constituting the tire components by usual methods. Specifically, the rubber compositions for the tire components prepared by adding and kneading the components, before vulcanization, are each extruded in conformity with the shape of the corresponding tire component and assembled with other tire components on a tire building machine to build an unvulcanized tire. The unvulcanized tire is heated and pressurized in a vulcanizer to yield a tire.

### EXAMPLES

The present invention is described in detail with reference to examples, but the present invention is not limited only to these examples.

The chemicals used in the examples are described below.

### <Materials>

NR: TSR20
BR51: JSR BR51 (high cis BR, BR synthesized using a Nd catalyst, cis content: 95% by mass) manufactured by JSR Corp.
BR1250H: BR1250H (low cis BR, BR synthesized using a Li catalyst) manufactured by Zeon Corp.
VCR617: UBEPOL VCR617 (syndiotactic polybutadiene crystal-containing BR) manufactured by Ube Industries, Ltd.
BR150B: UBEPOL BR150B (high cis BR, BR synthesized using a Ni catalyst, cis content: 95% by mass, Mooney viscosity (100°C): 40, Mw/Mn: 2.78, vinyl content: 2.0% by mass) manufactured by Ube Industries, Ltd.
SBR1502: SBR1502 (styrene content: 23.5% by mass) manufactured by Sumitomo Chemical Co., Ltd.
Carbon black N220: ShoBlack N220 (N₂SA: 114 m²/g, DBP: 114 ml/100 g) manufactured by Cabot Japan K.K.
Carbon black N330: ShoBlack N330 (N₂SA: 75 m²/g, DBP: 102 ml/100 g) manufactured by Cabot Japan K.K.
Carbon black N550: ShoBlack N550 (N₂SA: 40 m²/g, DBP: 121 ml/100 g) manufactured by Cabot Japan K.K.
Conductive carbon black: Ketjenblack EC300J (DBP: 360 ml/100 g, N₂SA: 800 m²/g) manufactured by Lion Corp.
Silica: Ultrasil VN3 (N₂SA: 175 m²/g) manufactured by Degussa
Silane coupling agent: Si266 manufactured by Degussa
Oil: Process X-140 manufactured by Japan Energy Corp.
Antioxidant: Nocrac 6C manufactured by Ouchi Shinko Chemical Industrial Co., Ltd.
Stearic acid: stearic acid "Tsubaki" manufactured by NOF Corp.
Zinc oxide: zinc oxide manufactured by Mitsui Mining & Smelting Co., Ltd.
Wax: Sunnoc N manufactured by Ouchi Shinko Chemical Industrial Co., Ltd.
Cobalt stearate: COST-S manufactured by Nippon Mining & Metals Corp.
Sulfur: sulfur powder manufactured by Tsurumi Chemical Industry Co., Ltd.
Vulcanization accelerator: Soxinol CZ manufactured by Sumitomo Chemical Co., Ltd.

### <Preparation of Conductive inner sidewall layer, Clinch rubber, Breaker rubber, Electrically conductive rubber, Tread rubber, Outer sidewall layer, and Carcass rubber>

The compounding ingredients shown in Tables 1 to 7, except the sulfur and vulcanization accelerator, were kneaded at 150°C for 5 minutes with an internal Banbury mixer. Then, to the mixture, the sulfur and vulcanization accelerator were added and further kneaded at 80°C for 3 minutes with an open roll mill. In this way, an unvulcanized conductive inner sidewall layer rubber composition A, an unvulcanized clinch rubber composition B, an unvulcanized breaker rubber composition C, an unvulcanized electrically conductive rubber composition D, an unvulcanized tread rubber composition E, an unvulcanized outer sidewall layer rubber composition F, and an unvulcanized carcass rubber composition G were prepared.

The unvulcanized rubber compositions were also vulcanized to prepare the respective vulcanized rubber compositions.

### <Volume resistivities of Rubber compositions>

15 cm × 15cm, 2 mm-thick specimens were prepared from the rubber compositions A to G shown in Tables 1 to 7, and measured for volume resistivity using an electric resistance meter R8340A (manufactured by Advantest Corp.) at a voltage of 500 V, an ambient temperature of 25°C, and a humidity of 50%. Larger values indicate that the rubber compositions have higher volume resistivities. The results are shown in Tables 1 to 8.

### <Viscoelasticity test>

The loss and storage moduli of the vulcanized rubber compositions for outer sidewall layers and conductive inner sidewall layers were measured using a viscoelasticity spectrometer VES (manufactured by Iwamoto Seisakusho Co., Ltd.) at a temperature of 70°C, a frequency of 10 Hz, an initial strain of 10% and a dynamic strain of 2%. The results are shown in Table 8.

### (Examples and Comparative Examples)

The rubber compositions prepared according to the rubber formulations shown in Tables 1 to 7 were used in the combinations shown in Table 8 and applied to a conductive inner sidewall layer, clinch rubber, breaker rubber, electrically conductive rubber, tread rubber, outer sidewall layer and carcass rubber, and vulcanized by a conventional method to produce a pneumatic tire with a size of 215/55R16 having the structure shown in Fig. 1.

The basic structure of the test tires thus prepared is as follows.

### <Carcass Ply (single ply)>

Cord angle: 90 degrees in the tire circumferential direction
Cord material: polyester 1670 dtex/2 <Breaker>
Cord angle: 24 degrees × 24 degrees in the tire circumferential direction
Cord material: steel cord (2+2×0.25)

The structure of the electrically conductive rubber used was 3 mm in width and circumferentially continuous, and the thicknesses of the outer sidewall layer and the conductive inner sidewall layer were set as shown in Table 8.

The following structures were also used: the breaker rubber and the conductive inner sidewall layer were contacted in a circumferential strip-like area with a width of 5 mm; the breaker rubber and the electrically conductive rubber were contacted over the whole surface of the electrically conductive rubber in the tire width direction; and the conductive inner sidewall layer and the clinch rubber were contacted in an area along the carcass shape with a width of 5 mm or more.

### <Layer thickness>

The thicknesses of the outer sidewall layer and the conductive inner sidewall layer of each of the pneumatic tires prepared as above were measured by disassembling the tire and using an optical microscope. The results are shown in Table 8.

### <Tire electrical conductivity test>

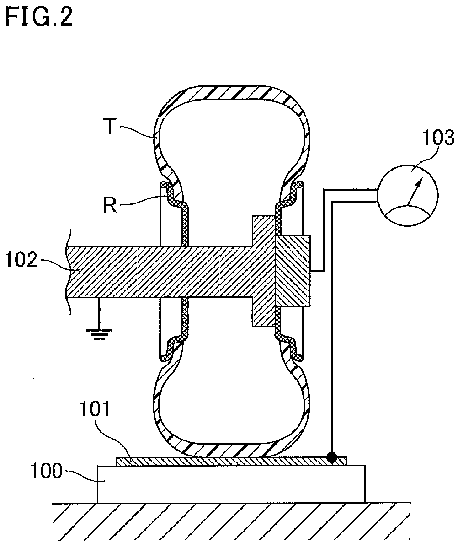

As shown in Fig. 2, the electric resistance of each tire-rim assembly was measured according to the JATMA standards using a measurement instrument including a metal plate 101 (electric resistance: 10 Ω or less) having a polished surface and placed on an insulating plate 100 having an electric resistance of 10¹² Ω or more, a conductive tire mounting shaft 102 for holding the tire/rim assembly, and an electric resistance meter 103. The tire T used in the test was previously sufficiently cleaned of the mold releasing agents and dirt on the surface and sufficiently dried. The other conditions were as follows.
Rim R: formed from an aluminum alloy, 16x7JJ
Load: 200 kPa
Test environment temperature (test chamber temperature): 25°C
Humidity: 50%
Measurement range of electric resistance meter: 10³ to 1.6×10¹⁶ Ω
Test voltage (applied voltage): 1000 V

The test was carried out as follows.

Each of the pneumatic tires prepared as above was mounted on a rim to prepare a tire/rim assembly. In the preparation, a soapy water was used as a lubricant for the contact portion between them. The tire/rim assembly was allowed to stand in a test chamber for 2 hours, and then mounted on the tire mounting shaft 102. Then, the above load was applied to the tire/rim assembly for 0.5 minutes, and released and then further applied for 2 minutes. Subsequently, the test voltage was applied, and after an elapsed time of 5 minutes the electric resistance between the tire mounting shaft 102 and the metal plate 101 was measured with the electric resistance meter 103. The measurement was carried out in four points spaced at 90° intervals in the tire circumferential direction, and the maximum of the measured values was taken as the electric resistance (measured value) of the tire T. It is to be noted that when the electric resistance is less than 100 MΩ, the tire is considered to have good electrical conductivity. The results are shown in Table 8.

### <Measurement of Tire weight>

The weight of the tires was measured using a common weighing machine.

### <Tire in-plane torsional rigidity>

The whole circumference of the tire tread portion of each of the pneumatic tires prepared as above was fixed to a basic rigidity measuring tester using clamps, and the in-plane torsional rigidity was determined based on the relation between torque and torsional angle when the tire was twisted about the tire axis. The details of the measurement conditions are described below. It is to be noted that when the in-plane torsional rigidity is 800 Nm/deg or more, the tire is considered to have good handling stability. The results are shown in Table 8.

### Measurement Conditions

Rim: 16x7JJ
Internal pressure: 200 kPa
Measurement range: 0.8±0.2 deg

### <Tire rolling resistance>

The pneumatic tires prepared as above were mounted on a normal rim, and the rolling resistance was measured using a rolling resistance tester (manufactured by STL) under the conditions described below. The reciprocals of the measured values are expressed as an index, with Comparative Example 4 set equal to 100. A higher index indicates smaller rolling resistance and thus better properties. In the present invention, tires with an index of 95 or more are considered good in terms of rolling resistance. The results are shown in Table 8.
Rim: 16x7JJ
Internal pressure: 200 kPa
Load: 4.7 kN
Velocity: 80 km/h

### <Tire electrical conductivity stability>

Electric resistance was measured in four points on the tire circumference by the tire electrical conductivity test described above. When all the four measured values are less than 100 MΩ, the electrical conductivity stability of the tire is rated as "Good", while when any of the four measured values is 100 MΩ or more, the electrical conductivity stability of the tire is rated as "Poor".

### <Crack growth resistance test>

The pneumatic tires prepared as above were mounted and run 30000 km at a velocity of 80 km/h under a load of 4.7 kN, and then the degree of crack growth in the sidewall portion was measured to assess crack growth resistance. Tires with a growth degree of 5 mm or less are rated as "Good", while tires with a growth degree of more than 5 mm are rated as "Poor". The results are shown in Table 8.

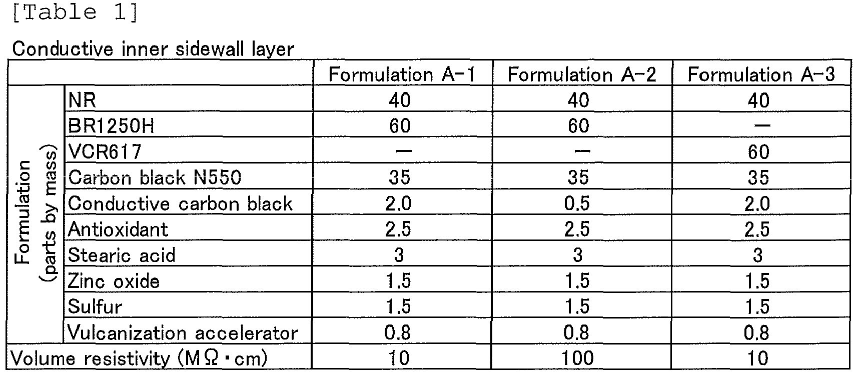

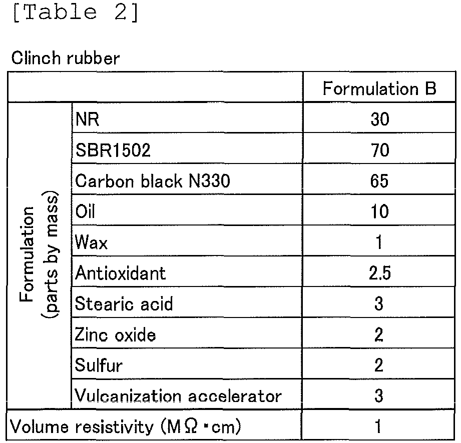

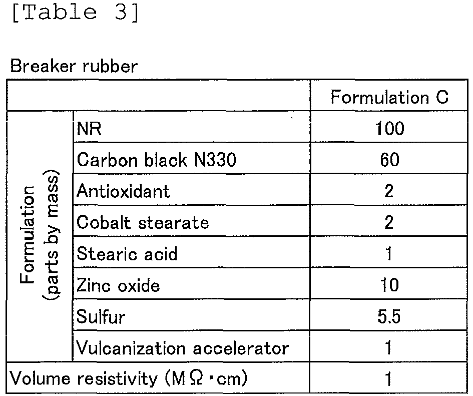

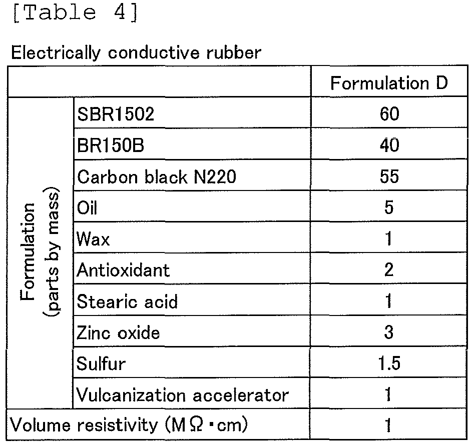

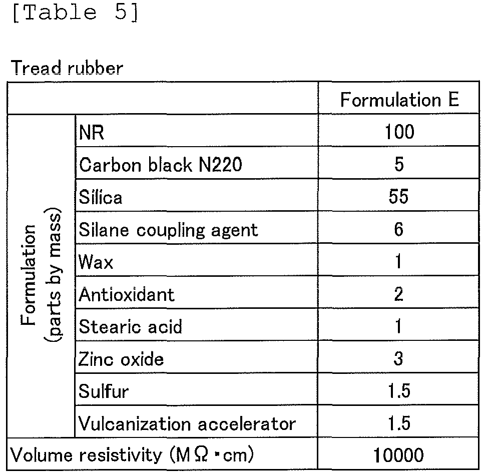

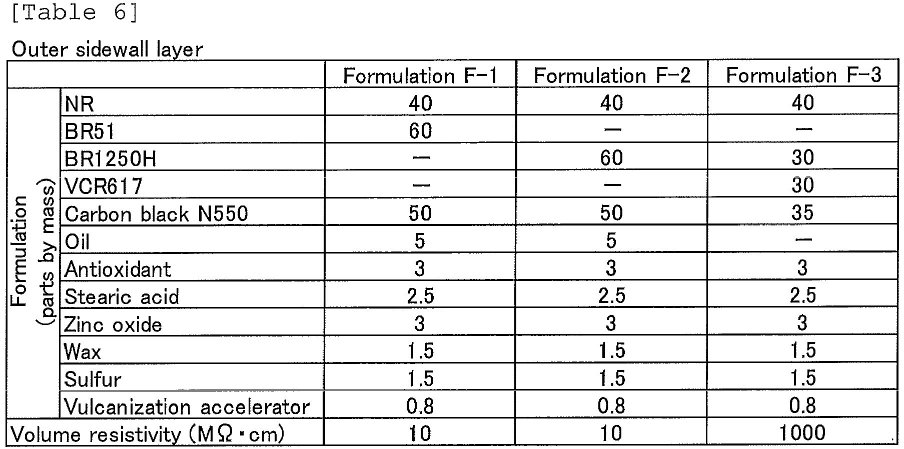

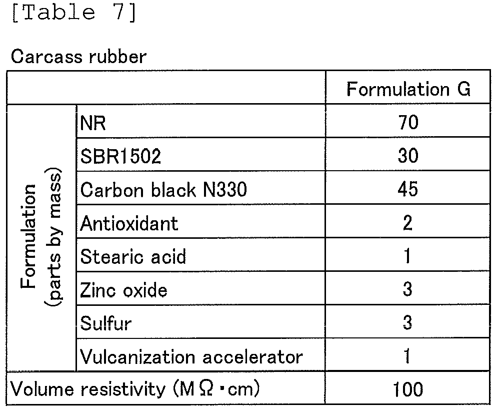

**[Table 8]**

| | | | Comparative Example | Comparative Example | Comparative Example | Comparative Example | Comparative Example | Comparative Example | Example | Example | Example |
|---|---|---|---|---|---|---|---|---|---|---|---|
| | | | 1 | 2 | 3 | 4 | 5 | 6 | 1 | 2 | 3 |
| Sidewall portion with single-layer structure | | | ✔ | ✔ | ✔ | ✔ | | | | | |
| Sidewall portion with two-layer structure | | | | | | | ✔ | ✔ | ✔ | ✔ | ✔ |
| Outer sidewall layer (1) | Rubber composition | | Formulation F-1 | Formulation F-1 | Formulation F-2 | Formulation F-3 | Formulation F-3 | Formulation F-3 | Formulation F-3 | Formulation F-3 | Formulation F-3 |
| | Storage modulus E'(1) | (Mpa) | 5.85 | 5.85 | 5.85 | 4.5 | 4.5 | 4.5 | 4.5 | 4.5 | 4.5 |
| | Loss modulus E"(1) | (Mpa) | 0.8 | 0.8 | 0.48 | 0.4 | 0.4 | 0.4 | 0.4 | 0.4 | 0.4 |
| | Thickness (1) | (mm) | 2.0 | 1.5 | 2.0 | 2.0 | 0.5 | 1.5 | 1.5 | 1.0 | 1.0 |
| | Volume resistivity | (MΩ·cm) | 10 | 10 | 10 | 1000 | 1000 | 1000 | 1000 | 1000 | 1000 |
| Conductive inner sidewall layer (2) | Rubber composition | | - | - | - | - | Formulation A-1 | Formulation A-2 | Formulation A-1 | Formulation A-1 | Formulation A-3 |
| | Storage modulus E'(2) | (Mpa) | - | - | - | - | 5.85 | 5.85 | 5.85 | 5.85 | 5.85 |
| | Loss modulus E"(2) | (Mpa) | - | - | - | - | 0.48 | 0.48 | 0.48 | 0.48 | 0.6 |
| | Thickness (2) | (mm) | - | - | - | - | 1.0 | 0.5 | 0.5 | 0.5 | 0.5 |
| | Ketjenblack EC300J | (phr) | - | - | - | - | 2.0 | 0.5 | 2.0 | 2.0 | 2.0 |
| | Volume resistivity | (MΩ·cm) | - | - | - | - | 10 | 100 | 10 | 10 | 10 |
| Thickness of sidewall portion | | (mm) | 2.0 | 1.5 | 2.0 | 2.0 | 1.5 | 2.0 | 2.0 | 1.5 | 1.5 |
| Thickness ratio of outer sidewall layer (1) to conductive inner sidewall layer (2) | | (Thickness (1)/ Thickness (2)) | - | - | - | - | 0.5 | 3.0 | 3.0 | 2.0 | 2.0 |
| Ratio of storage modulus of conductive inner sidewall layer (2) to storage modulus of outer sidewall layer (1) | | (E'(2)/E'(1)) | - | - | - | - | 1.3 | 1.3 | 1.3 | 1.3 | 1.3 |
| Ratio of loss modulus of conductive inner sidewall layer (2) to loss modulus of outer sidewall layer (1) | | (E"(2)/E"(1)) | - | - | - | - | 1.2 | 1.2 | 1.2 | 1.2 | 1.5 |
| Electrical conductivity (Target: less than 100MΩ) | | (MΩ) | 20 | 20 | 20 | 200 | 30 | 100 | 50 | 50 | 30 |
| Weight (Target: 100 or higher) | | (kg) | 100 | 100 | 100 | 100 | 100 | 100 | 100 | 102 | 100 |
| In-plane torsional rigidity | | (Nm/deg) | 900 | 800 | 900 | 650 | 900 | 850 | 850 | 800 | 850 |
| Rolling resistance index (Target: 100 or higher) | | | 90 | 93 | 95 | 100 | 96 | 97 | 97 | 98 | 95 |
| Electrical conductivity stability | | | Good | Good | Good | Poor | Good | Good | Good | Good | Good |
| Crack growth resistance | | | Good | Good | Poor | Good | Poor | Good | Good | Good | Good |

As can be seen from Table 8, good electrical conductivity, good fuel economy (rolling resistance), good handling stability and good crack growth resistance were exhibited in the pneumatic tires of the examples in which in the sidewall portion, the thickness ratio of the outer sidewall layer (1) to the conductive inner sidewall layer (2) was 2.0 or more, the ratio of the storage modulus E'(2) at 70°C of the conductive inner sidewall layer (2) to the storage modulus E'(1) at 70°C of the outer sidewall layer (1) was 1.3 or more, and the volume resistivity of the conductive inner sidewall layer (2) was less than 1×10⁸ Ω·cm. In contrast, inferior properties were exhibited in the pneumatic tires of Comparative Examples 1 to 4 which had no layer corresponding to the conductive inner sidewall layer in the present invention and had a sidewall portion formed of a single layer of sidewall rubber. Moreover, the pneumatic tires of Comparative Examples 5 and 6 whose outer sidewall layer or conductive inner sidewall layer did not satisfy some of the above physical property requirements also exhibited inferior properties.

### REFERENCE SIGNS LIST

- 1: Pneumatic tire
- 2: Chafer rubber
- 3: Clinch rubber
- 4: Covering rubber
- 5: Electrically conductive rubber
- 6: Tread rubber
- 7: Outer sidewall layer
- 8: Breaker rubber
- 9: Carcass
- 10: Bead apex
- 11: Band
- 12: Bead core
- 13: Conductive inner sidewall layer
- T: Tire
- R: Rim
- 100: Insulating plate
- 101: Metal plate
- 102: Tire mounting shaft
- 103: Electric resistance meter

## Claims

1. A pneumatic tire, comprising:
a tread portion;
a sidewall portion;
a bead portion, the bead portion comprising a clinch in an area abutting against a rim;
a carcass located to extend radially inwardly of the tread portion and the sidewall portion to the bead portion;
a breaker located between the tread portion and the carcass; and
an electrically conductive rubber connected to the breaker and located to be exposed on a surface of the tread portion,
the sidewall portion being formed by laminating two or more rubber layers including (1) an outer sidewall layer constituting an outer surface of the tire and (2) a conductive inner sidewall layer connected to the clinch and the breaker and located between the carcass and the outer sidewall layer (1),
each of the clinch, the conductive inner sidewall layer (2), the breaker and the electrically conductive rubber having a volume resistivity of less than 1×10⁸ Ω·cm,
each of the outer sidewall layer (1) and the carcass having a volume resistivity of 1×10⁸ Ω·cm or more,
a thickness ratio of the outer sidewall layer (1) to the conductive inner sidewall layer (2) [(thickness of layer (1))/(thickness of layer (2))] being 2.0 or more, and
a ratio of a storage modulus E'(2) at 70°C of the conductive inner sidewall layer (2) to a storage modulus E'(1) at 70°C of the outer sidewall layer (1) (E'(2)/E'(1)) being 1.3 or more.

2. The pneumatic tire according to claim 1,
wherein the outer sidewall layer (1) has a storage modulus E'(1) at 70°C of 5.0 MPa or less and a loss modulus E"(1) at 70°C of 0.5 MPa or less.

3. The pneumatic tire according to claim 1 or 2,
wherein a ratio of a loss modulus E"(2) at 70°C of the conductive inner sidewall layer (2) to a loss modulus E"(1) at 70°C of the outer sidewall layer (1) (E"(2)/E"(1)) is 1.5 or less.

4. The pneumatic tire according to any one of claims 1 to 3,
wherein the conductive inner sidewall layer (2) is formed from a rubber composition for conductive inner sidewall layers comprising 1.0 to 10 parts by mass of conductive carbon black per 100 parts by mass of a rubber component.
